# EUROPÄISCHE PATENTSCHRIFT

(11) **EP 3 792 083 B1**
(45) Veröffentlichungstag und Bekanntmachung des Hinweises auf die Patenterteilung: **05.11.2025**
(21) Anmeldenummer: 20193765.3
(22) Anmeldetag: 01.09.2020
(51) Int. Cl.: B60C 23/00, B60C 23/04

(54) **AUTOMATISCHE EINRICHTUNG EINES KONTROLLSYSTEMS EINES KRAFTFAHRZEUGS**
AUTOMATIC DEVICE OF A CONTROL SYSTEM OF A MOTOR VEHICLE
INSTALLATION AUTOMATIQUE D'UN SYSTÈME DE COMMANDE D'UN VÉHICULE AUTOMOBILE

(30) Priorität: 16.09.2019 DE 102019214060
(43) Veröffentlichungstag der Anmeldung: 17.03.2021
(73) Patentinhaber: Continental Reifen Deutschland GmbH, 30175 Hannover (DE)
(72) Erfinder: Gläser, Frank, 30419 Hannover (DE); Sahlmüller, Baldo, 30419 Hannover (DE)
(74) Vertreter: Continental Corporation

(56) Entgegenhaltungen:
- EP-A1- 2 631 093
- DE-A1- 102008 021 469
- DE-A1- 102011 050 985
- US-A1- 2005 187 667

## Beschreibung

Die vorliegende Erfindung betrifft Verfahren, ein Computerprogramm mit Instruktionen und eine Vorrichtung zum Einrichten eines Kontrollsystems für eine in einem Reifen eines Kraftfahrzeugs angeordnete elektronische Komponente. Die Erfindung betrifft zudem eine elektronische Komponente, die zur Verwendung mit einem erfindungsgemäßen Verfahren oder einer erfindungsgemäßen Vorrichtung geeignet ist.

Reifendrucksensoren werden derzeit im LKW-Bereich mit einem Handgerät eingelernt. Dazu sendet das Handgerät ein LF-Funksignal (LF: Low Frequency; Niederfrequenz), z.B. mit einer Frequenz von 125 kHz, das vom Reifendrucksensor empfangen wird. Dieser sendet daraufhin eine Antwort in Form eines RF-Funksignals (RF: Radio Frequency; Hochfrequenz), z.B. mit einer Frequenz von 315 MHz oder 434 MHz. Über die Funkstärke des LF-Signals kann die Reichweite des Funksignals gut kontrolliert werden, sodass die Reifendrucksensoren gezielt kontaktiert werden können. Die Konfiguration mit dem Handgerät erzeugt allerdings einen zusätzlichen Aufwand und beinhaltet zudem eine menschliche Fehlerquelle.

Als Alternative zum Einlernen mittels eines Handgerätes gibt es Ansätze, die Positionen der Reifedrucksensoren, d.h. die zugehörigen Reifenpositionen, automatisch mit einem System im Fahrzeug über die empfangene Signalstärke an den RF-Empfängern des Fahrzeugs zu bestimmen. Derartige System sind im LKW-Bereich noch nicht im Markt verfügbar, da unterschiedliche Radkonstellationen und Achsen mit Zwillingsreifen die Unterscheidbarkeit der Signalstärken erschweren.

Derzeit werden zudem Systeme entwickelt, welche den Reifendruck während der Fahrt dynamisch an die Fahrbahnbeschaffenheit anpassen können. Hierzu ist in jedem Rad eine spezielle Pumpe vorgesehen, welche den Reifendruck in einem gewissen Rahmen erhöhen oder erniedrigen kann. Ein solches System wird beispielsweise in DE 10 2016 216 621 A1 beschrieben. Auch bei einer Kommunikation mit den in einem solchen System verwendeten Pumpen mittels Funk ist es vorteilhaft, wenn die jeweiligen Positionen der Pumpen bekannt sind.

Des Weiteren kann vorgesehen sein, die Reifen eines Kraftfahrzeugs mit elektronischen Identifikationsmitteln auszustatten, z.B. mit RFID-Transpondern (RFID: Radio-Frequency Identification; Identifizierung mit Hilfe elektromagnetischer Wellen) oder NFC-Systemen (NFC: Near Field Communication; Nahfeldkommunikation). Dies kann genutzt werden, um Regelungssysteme des Kraftfahrzeugs an die konkret verbauten Reifentypen anzupassen. Auch in diesem Fall ist es sinnvoll, die Position der elektronischen Identifikationsmittel in Bezug auf das Kraftfahrzeug zu erfassen.

DE 10 2008 021 469 A1 beschreibt ein Verfahren zum Überwachen und drahtlosen Signalisieren von Daten, die Angaben über die in Luftreifen von Rädern eines Fahrzeuges herrschenden Druckzustände enthalten. Die Daten werden jeweils von in den Rädern angeordneten elektronischen Modulen drahtlos an ein im Fahrzeug angeordnetes Steuergerät gesendet. Während eines ersten Modus, der einem Stillstands-Zustand des Fahrzeuges zugeordnet ist, werden dabei keine Daten gesendet. Während eines weiteren Modus, der einem anderen Zustand des Fahrzeuges zugeordnet ist, werden die Daten in Form von Telegrammen von dem jeweiligen elektronischen Modul an das Steuergerät gesendet. Mittels eines Beschleunigungssensors wird der Übergang vom ersten Modus in den weiteren Modus ermittelt.

Ein System zur Bestimmung einer Position einer in einem Reifen angeordneten elektronischen Komponente ist aus der US2005187667 A1 bekannt.

Es ist eine Aufgabe der vorliegenden Erfindung, Lösungen für das Einrichten eines Kontrollsystems bereitzustellen, die auf einfache und praktikable Weise eine automatische Bestimmung einer Position einer in einem Reifen angeordneten elektronischen Komponente ermöglichen.

Diese Aufgabe wird durch ein Verfahren mit den Merkmalen des Anspruchs 1, durch ein Computerprogramm mit Instruktionen mit den Merkmalen des Anspruchs 7, durch eine elektronische Komponente mit den Merkmalen des Anspruchs 8 und durch eine Vorrichtung mit den Merkmalen des Anspruchs 10 gelöst.

Bevorzugte Ausgestaltungen der Erfindung sind Gegenstand der abhängigen Ansprüche.

Gemäß einem ersten Aspekt der Erfindung umfasst ein Verfahren zum automatischen Einrichten eines Kontrollsystems für eine in einem Reifen eines Kraftfahrzeugs angeordnete elektronische Komponente die Schritte:
- Aktivieren eines Einrichtungsmodus der elektronischen Komponente im Ansprechen auf ein von der elektronischen Komponente empfangenes externes Signal oder eine von der elektronischen Komponente gemessene Erhöhung eines Reifendrucks über einen Schwellwert;
- Senden einer Vielzahl von Signalen durch die elektronische Komponente mit einem zeitlichen Signalabstand, der kürzer ist als ein zeitlicher Signalabstand in anderen Betriebsmodi der elektronischen Komponente; und
- Deaktivieren des Einrichtungsmodus der elektronischen Komponente.

Gemäß einem weiteren Aspekt der Erfindung umfasst ein Computerprogramm Instruktionen, die bei Ausführung durch einen Computer den Computer zur Ausführung der folgenden Schritte zum automatischen Einrichten eines Kontrollsystems für eine in einem Reifen eines Kraftfahrzeugs angeordnete elektronische Komponente veranlassen:
- Aktivieren eines Einrichtungsmodus der elektronischen Komponente im Ansprechen auf ein von der elektronischen Komponente empfangenes externes Signal oder eine von der elektronischen Komponente gemessene Erhöhung eines Reifendrucks über einen Schwellwert;
- Senden einer Vielzahl von Signalen durch die elektronische Komponente mit einem zeitlichen Signalabstand, der kürzer ist als ein zeitlicher Signalabstand in anderen Betriebsmodi der elektronischen Komponente; und
- Deaktivieren des Einrichtungsmodus der elektronischen Komponente.

Der Begriff Computer ist dabei breit zu verstehen. Insbesondere umfasst er auch in den elektronischen Komponenten verbaute Mikrocontroller und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung weist eine elektronische Komponente zur Verwendung mit einem erfindungsgemäßen Verfahren oder einer erfindungsgemäßen einen aktivierbaren Einrichtungsmodus auf. Die elektronische Komponente ist dabei eingerichtet, im Einrichtungsmodus eine Vielzahl von Signalen mit einem zeitlichen Signalabstand zu senden, der kürzer ist als ein zeitlicher Signalabstand in anderen Betriebsmodi der elektronischen Komponente. Bei der elektronischen Komponente kann es sich beispielsweise um einen Reifendrucksensor, eine Pumpe oder ein Identifikationsmittel handeln. Die elektronische Komponente ist eingerichtet, den Einrichtungsmodus im Ansprechen auf ein von der elektronischen Komponente empfangenes externes Signal oder eine von der elektronischen Komponente gemessene Erhöhung eines Reifendrucks über einen Schwellwert zu aktivieren

Für eine in einem Reifen verbaute elektronische Komponente ist erfindungsgemäß ein Einrichtungsmodus vorgesehen. Nach Aktivierung dieses Einrichtungsmodus sendet die elektronische Komponente eine Vielzahl von Signalen, z.B. die die nächsten 512 Telegramme, mit einem sehr geringen zeitlichen Abstand. Beispielsweise kann ein zeitlicher Abstand von einer Sekunde vorgesehen sein. Dieser zeitliche Abstand wird gegebenenfalls durch gesetzliche Regelungen limitiert. Nach dem Senden der vorgesehenen Anzahl von Signalen bzw. Telegrammen geht die elektronische Komponente in ihren gewöhnlichen Fahrmodus über, in dem der zeitliche Abstand zwischen den gesendeten Signalen deutlich größer ist. Die elektronische Komponente generiert somit anfangs viele Signale in kurzer Zeit, um eine Positionsbestimmung mittels der Funkstärke zu ermöglichen bzw. zu unterstützen.

Gemäß einem weiteren Aspekt der Erfindung umfasst ein Verfahren zum automatischen Einrichten eines Kontrollsystems für eine in einem Reifen eines Kraftfahrzeugs angeordnete elektronische Komponente die Schritte:
- Empfangen einer Vielzahl von Signalen, die von zumindest einer in einem Einrichtungsmodus befindlichen elektronische Komponente mit einem zeitlichen Signalabstand gesendet werden, der kürzer ist als ein zeitlicher Signalabstand in anderen Betriebsmodi der elektronischen Komponente;
- Bestimmen einer Signalstärke der empfangenen Signale, wobei für die zumindest eine in einem Einrichtungsmodus befindliche elektronische Komponente ein Maximalwert der Signalstärke der empfangenen Signale bestimmt wird; und
- Bestimmen einer Position der elektronischen Komponente in Bezug auf das Kraftfahrzeug auf Basis der Signalstärke.

Gemäß einem weiteren Aspekt der Erfindung umfasst ein Computerprogramm Instruktionen, die bei Ausführung durch einen Computer den Computer zur Ausführung der folgenden Schritte zum automatischen Einrichten eines Kontrollsystems für eine in einem Reifen eines Kraftfahrzeugs angeordnete elektronische Komponente veranlassen:
- Empfangen einer Vielzahl von Signalen, die von zumindest einer in einem Einrichtungsmodus befindlichen elektronischen Komponente mit einem zeitlichen Signalabstand gesendet werden, der kürzer ist als ein zeitlicher Signalabstand in anderen Betriebsmodi der elektronischen Komponente;
- Bestimmen einer Signalstärke der empfangenen Signale, wobei für die zumindest eine in einem Einrichtungsmodus befindliche elektronische Komponente ein Maximalwert der Signalstärke der empfangenen Signale bestimmt wird; und
- Bestimmen einer Position der elektronischen Komponente in Bezug auf das Kraftfahrzeug auf Basis der Signalstärke.

Der Begriff Computer ist dabei breit zu verstehen. Insbesondere umfasst er auch Steuergeräte und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung hat eine Vorrichtung zum automatischen Einrichten eines Kontrollsystems für eine in einem Reifen eines Kraftfahrzeugs angeordnete elektronische Komponente:
- eine Empfangseinheit zum Empfangen einer Vielzahl von Signalen, die von zumindest einer in einem Einrichtungsmodus befindlichen elektronischen Komponente mit einem zeitlichen Signalabstand gesendet werden, der kürzer ist als ein zeitlicher Signalabstand in anderen Betriebsmodi der elektronischen Komponente; und
- eine Auswerteeinheit zum Bestimmen einer Signalstärke der empfangenen Signale und zum Bestimmen einer Position der elektronischen Komponente in Bezug auf das Kraftfahrzeug auf Basis der Signalstärke, wobei die Auswerteeinheit eingerichtet ist, beim Bestimmen der Signalstärke für die zumindest eine in einem Einrichtungsmodus befindliche elektronische Komponente einen Maximalwert der Signalstärke der empfangenen Signale zu bestimmen.

Die jeweiligen Positionen der elektronischen Komponenten sollen automatisch erkannt werden. Zu diesem Zweck wird vorzugsweise die Funkstärke der von den elektronischen Komponenten gesendeten Signale an den Empfängern im Kraftfahrzeug genutzt. Dazu müssen die empfangenen Signalstärkewerte für ein und dieselbe elektronische Komponente relativ konstant sein und von denen der anderen im Kraftfahrzeug vorhandenen elektronischen Komponenten unterscheidbar sein. Die Signalstärke der Funksignale am Empfänger ist abhängig von der Entfernung zwischen Sender und Empfänger. Bei elektronischen Komponenten, die in den Innerliner geklebt oder in die Seitenwand des Reifens eingelassen sind, ändert sich der Abstand allerdings permanent, sobald sich das Rad dreht. Dies hat zur Folge, dass sich die Signalstärkewerte für die empfangenen Signale von ein und demselben Reifen fortlaufend ändern. Aus Sicht eines Kontrollsystems für eine in einem Reifen verbaute elektronische Komponente ist deshalb erfindungsgemäß vorgesehen, dass im Rahmen eines Einrichtungsmodus der elektronischen Komponente eine Vielzahl von Signalen empfangen wird, die die Positionsbestimmung mittels der Funkstärke unterstützen. Nach Aktivierung dieses Einrichtungsmodus im Fahrbetrieb sendet die elektronische Komponente beispielsweise die nächsten 512 Telegramme mit einem sehr geringen zeitlichen Abstand, z.B. mit einem zeitlichen Abstand von einer Sekunde. Ist der Zeitraum des Einrichtungsmodus lang genug und die Senderfrequenz hoch genug, werden ausreichend viele Situationen auftreten, in denen der Abstand zwischen der elektronischen Komponente und dem jeweiligen Empfänger am kürzesten ist. Die in diesen Situationen gemessenen Funkstärken können dann für die Positionsbestimmung genutzt werden.

Erfindungsgemäß wird der Einrichtungsmodus der elektronischen Komponente durch ein von der elektronischen Komponente empfangenes Signal aktiviert. Die Aktivierung des Einrichtungsmodus durch ein externes Signal, das beispielsweise vom Kraftfahrzeug gesendet wird, hat den Vorteil, dass ein definierter Zeitpunkt vorgegeben werden kann, zu dem die Positionsbestimmung der elektronischen Komponente erfolgen soll. Dies kann z.B. dann der Fall sein, wenn das Kontrollsystem feststellt, dass Positionsinformationen fehlen. Ebenso kann der Einrichtungsmodus nach der Reifenmontage durch ein Handgerät aktiviert werden. In diesem Fall kann vorgesehen sein, dass der Einrichtungsmodus so lange aktiv ist, bis eine Bewegung des Reifens über einen Mindestzeitraum festgestellt wird.

Wenn die elektronische Komponente ein Reifendrucksensor ist, kann der Einrichtungsmodus der elektronischen Komponente alternativ aktiviert werden, wenn von der elektronischen Komponente eine Erhöhung des Reifendrucks über einen Schwellwert gemessen wird. In diesem Fall handelt es sich beim Kontrollsystem um ein Reifendruckkontrollsystem. Vorzugsweise erfolgt die Positionsbestimmung für einen Reifendrucksensor beim erstmaligen Losfahren nach seiner Montage. Um dies zu erreichen geht der Reifendrucksensor automatisch in den Einrichtungsmodus, wenn er erstmalig unter Druck gesetzt wird, z.B. wenn der Reifendrucksensor einen Druck von mehr als 0.5 bar erkennt. Ebenso kann der Reifendrucksensor automatisch in den Einrichtungsmodus gehen, wenn er nach einem Zeitraum ohne Druck, z.B. einem gemessenen Druck von weniger als 0.05 bar, wieder unter Druck gebracht wird. Durch die Detektion des Reifenwechsels anhand des Drucks wird eine Automatisierung der Positionsbestimmung ermöglicht. Die Aktivierung des Einrichtungsmodus auf Basis des gemessenen Drucks hat zudem den Vorteil, dass für die Aktivierung ausschließlich ohnehin vorhandene Komponenten des Reifendrucksensors genutzt werden, sodass keine Zusatzkosten entstehen. Vorzugsweise wird der Einrichtungsmodus dabei nur aktiviert, wenn zugleich eine Bewegung des Reifens über einen Mindestzeitraum festgestellt wird, z.B. mit Hilfe eines Beschleunigungssensors. Anhand der Radialbeschleunigung kann beispielsweise detektiert werden, dass sich die elektronische Komponente in einem sich bewegenden Reifen befindet und diese Bewegung mehr als einen Mindestzeitraum, beispielsweise 10 Minuten, stattgefunden hat. Dadurch wird sichergestellt, dass der Einrichtungsmodus nur aktiviert wird, wenn der Reifen auch wirklich bereits am Kraftfahrzeug montiert ist und nicht lediglich von einem Werkstattmitarbeiter über den Boden gerollt wird. Ohne diese Maßnahme könnte es unter Umständen vorkommen, dass der Einrichtungsmodus im normalen Fahrbetrieb nicht mehr aktiviert wird.

Erfindungsgemäß werden beim Bestimmen der Signalstärke Maximalwerte der Signalstärke der empfangenen Signale bestimmt. Beispielsweise können direkt die maximalen gemessenen Werte übernommen werden. Alternativ können die Maximalwerte durch das Anpassen einer Funktion an die Sequenz der Messwerte bestimmt werden. Die Maximalwerte sind üblicherweise dann zu erwarten, wenn der Abstand zwischen der elektronischen Komponente und dem Empfänger am geringsten ist. Ist der Zeitraum des Einrichtungsmodus lang genug und die Senderfrequenz hoch genug, werden ausreichend viele Situationen auftreten, in denen dieser kürzeste Abstand gegeben ist, sodass eine zuverlässige Positionsbestimmung ermöglicht wird.

Gemäß einem Aspekt der Erfindung wird der Einrichtungsmodus der elektronischen Komponente nach einem vorgegebenen Zeitraum deaktiviert. Dies stellt sicher, dass die elektronische Komponente nach dem vorgegebenen Zeitraum wieder für ihre eigentliche Aufgabe zur Verfügung steht. Zudem wird auf diese Weise der Energieverbrauch begrenzt. Vorzugsweise wird eine erfindungsgemäße Lösung in einem Nutzfahrzeug genutzt, insbesondere in einem Lastkraftwagen, einem Bus oder einer Baumaschine. Bei der Bestimmung der Position einer elektronischen Komponente auf Basis der Funkstärke der von der elektronischen Komponente gesendeten Signale müssen die empfangenen Signalstärkewerte für ein und dieselbe elektronische Komponente relativ konstant sein. Ist die elektronische Komponente in einem Reifen eingelassen, ändert sich der Abstand allerdings permanent, sobald sich das Rad dreht. Dieser Effekt ist bei Lastkraftwagen, Bussen oder Baumaschinen aufgrund der größeren Reifendurchmesser besonders groß. Die erfindungsgemäße Lösung ermöglicht es, auch bei diesen Fahrzeugen eine Positionsbestimmung auf Basis der Funkstärke zu realisieren.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch ein Verfahren zum automatischen Einrichten eines Kontrollsystems für eine in einem Reifen eines Kraftfahrzeugs angeordnete elektronische Komponente;
- Fig. 2: zeigt eine erste Ausführungsform einer Vorrichtung zum automatischen Einrichten eines Kontrollsystems für eine in einem Reifen eines Kraftfahrzeugs angeordnete elektronische Komponente;
- Fig. 3: zeigt eine zweite Ausführungsform einer Vorrichtung zum automatischen Einrichten eines Kontrollsystems für eine in einem Reifen eines Kraftfahrzeugs angeordnete elektronische Komponente;
- Fig. 4: zeigt schematisch einen Reifen für ein Kraftfahrzeug, in dem eine erfindungsgemäße elektronische Komponente verbaut ist;
- Fig. 5: zeigt schematisch den Aufbau einer erfindungsgemäßen elektronischen Komponente; und
- Fig. 6: zeigt schematisch ein Kraftfahrzeug, in dem eine erfindungsgemäße Lösung realisiert ist.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

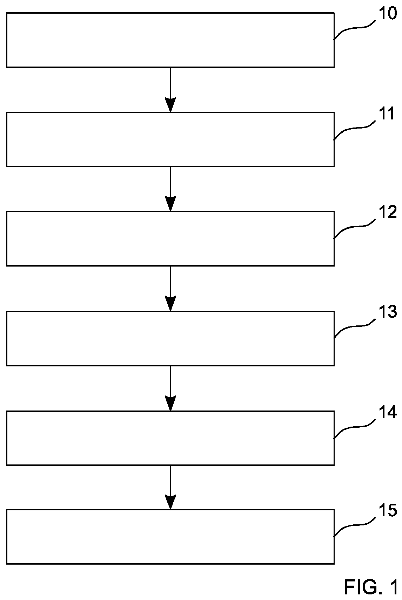

Fig. 1 zeigt schematisch ein Verfahren zum automatischen Einrichten eines Kontrollsystems für eine in einem Reifen eines Kraftfahrzeugs angeordnete elektronische Komponente. Bei dem Kontrollsystem kann es sich beispielsweise um ein Reifendruckkontrollsystem handeln. Vorzugsweise ist das Kraftfahrzeug ein Lastkraftwagen, ein Bus oder eine Baumaschine. Der Einfachheit halber sind in der Figur sowohl die von der elektronischen Komponente ausgeführten Schritte als auch die seitens des Kraftfahrzeugs ausgeführten Schritte wiedergegeben. In einem ersten Schritt wird ein Einrichtungsmodus der elektronischen Komponente aktiviert 10. Dies kann z.B. durch ein von der elektronischen Komponente empfangenes Signal erfolgen. Handelt es sich bei der elektronischen Komponente beispielsweise um einen Reifendrucksensor, so kann der Einrichtungsmodus der elektronischen Komponente alternativ aktiviert werden 10, wenn von der elektronischen Komponente eine Erhöhung des Reifendrucks über einen Schwellwert gemessen wird. Dabei kann als Bedingung vorgesehen sein, dass zugleich eine Bewegung des Reifens über einen Mindestzeitraum festgestellt werden muss. Nach der Aktivierung des Einrichtungsmodus sendet 11 die elektronische Komponente eine Vielzahl von Signalen mit einem zeitlichen Signalabstand, der kürzer ist als ein zeitlicher Signalabstand in anderen Betriebsmodi der elektronischen Komponente. Mittels eines im Fahrzeug angeordneten Empfängers werden die gesendete Signale empfangen 12. Dabei wird eine Signalstärke der empfangenen Signale bestimmt 13. Auf Basis der Signalstärke wird schließlich eine Position der elektronischen Komponente in Bezug auf das Kraftfahrzeug bestimmt 14. Dazu können beispielsweise Maximalwerte der Signalstärke der empfangenen Signale bestimmen werden. Nach Abschluss der Positionsbestimmung wird der Einrichtungsmodus der elektronischen Komponente deaktiviert 15. Vorzugsweise wird der Einrichtungsmodus der elektronischen Komponente dabei automatisch nach einem vorgegebenen Zeitraum deaktiviert.

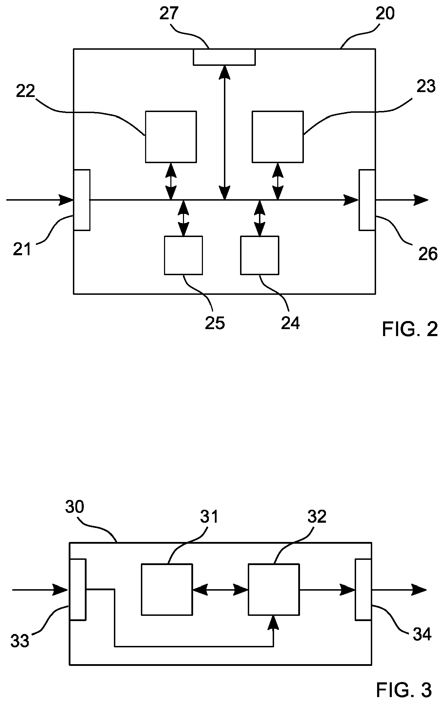

Fig. 2 zeigt eine vereinfachte schematische Darstellung einer ersten Ausführungsform einer Vorrichtung 20 zum automatischen Einrichten eines Kontrollsystems für eine in einem Reifen eines Kraftfahrzeugs angeordnete elektronische Komponente. Bei dem Kontrollsystem kann es sich beispielsweise um ein Reifendruckkontrollsystem handeln. Die elektronische Komponente ist in diesem Fall ein Reifendrucksensor. Vorzugsweise ist das Kraftfahrzeug ein Lastkraftwagen, ein Bus oder eine Baumaschine. Die Vorrichtung 20 hat einen Eingang 21, über den eine Empfangseinheit 22 eine Vielzahl von Signalen empfangen kann, die von zumindest einer in einem Einrichtungsmodus befindlichen elektronischen Komponente mit einem zeitlichen Signalabstand gesendet werden, der kürzer ist als ein zeitlicher Signalabstand in anderen Betriebsmodi der elektronischen Komponente. Eine Auswerteeinheit 23 bestimmt eine Signalstärke der empfangenen Signale. Zudem bestimmt die Auswerteeinheit 23 auf Basis der Signalstärke eine Position der elektronischen Komponente in Bezug auf das Kraftfahrzeug. Dazu kann die Auswerteeinheit 23 beispielsweise Maximalwerte der Signalstärke der empfangenen Signale bestimmen.

Die Empfangseinheit 22 und die Auswerteeinheit 23 können von einer Kontrolleinheit 24 gesteuert werden. Über eine Benutzerschnittstelle 27 können gegebenenfalls Einstellungen der Empfangseinheit 22, der Auswerteeinheit 23 oder der Kontrolleinheit 24 geändert werden. Die in der Vorrichtung 20 anfallenden Daten können bei Bedarf in einem Speicher 25 abgelegt werden, beispielsweise für eine spätere Auswertung oder für eine Nutzung durch die Komponenten der Vorrichtung 20. Der Eingang 21 und der Ausgang 26 können zu einer bidirektionalen Schnittstelle zusammengefasst sein. Die Empfangseinheit 22, die Auswerteeinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU (GPU: Graphics Processing Unit; Grafikprozessor) oder einer CPU (CPU: Central Processing Unit; zentrale Verarbeitungseinheit).

Fig. 3 zeigt eine vereinfachte schematische Darstellung einer zweiten Ausführungsform einer Vorrichtung 30 zum automatischen Einrichten eines Kontrollsystems für eine in einem Reifen eines Kraftfahrzeugs angeordnete elektronische Komponente. Die Vorrichtung 30 weist einen Prozessor 32 und einen Speicher 31 auf. Beispielsweise handelt es sich bei der Vorrichtung 30 um einen Computer oder ein Steuergerät. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Signalen, die von der elektronischen Komponente gesendet werden. Vom Prozessor 32 generierte Daten werden über einen Ausgang 34 bereitgestellt. Darüber hinaus können sie im Speicher 31 abgelegt werden. Im Speicher 31 können zudem Messdaten oder Berechnungsergebnisse abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

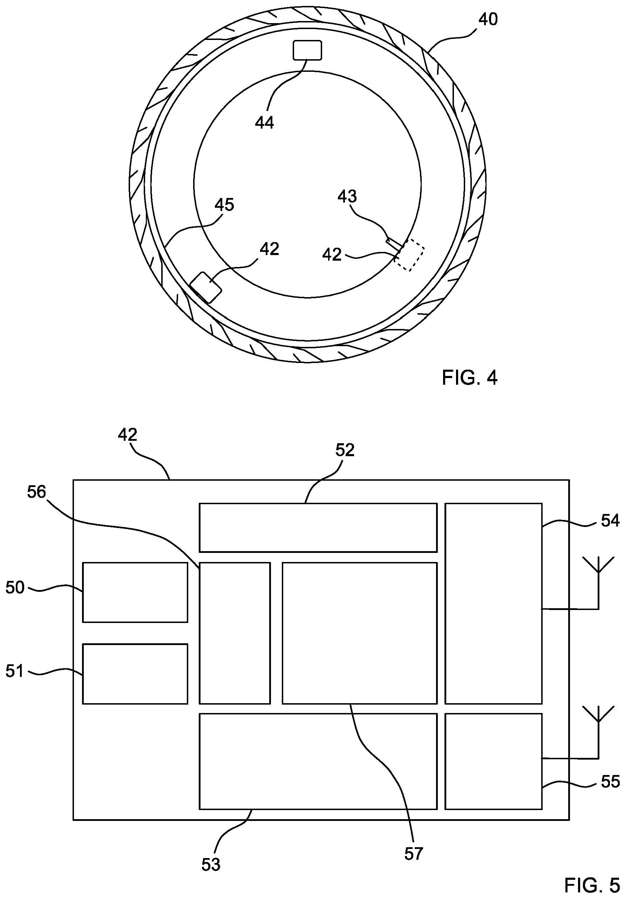

Fig. 4 zeigt schematisch einen Reifen 40 für ein Kraftfahrzeug, in dem zwei erfindungsgemäße elektronische Komponenten verbaut sind. Bei einer ersten elektronischen Komponente handelt es sich um einen Reifendrucksensor 42. Dieser kann am Innerliner 45 des Reifens angebracht sein, beispielsweise mit Hilfe eines eingeklebten Containers. Alternativ kann der Reifendrucksensor 42 auch an einem Ventil 43 des Reifens angeordnet sein. Dies ist durch den gestrichelten Kasten am Ventil 43 angedeutet. Bei einer zweiten elektronischen Komponente handelt es sich hingegen um ein Identifikationsmittel 44, das eine eindeutige Identifikation des Reifens ermöglicht. Das Identifikationsmittel 44 kann beispielsweise ein RFID-Transponder oder ein NFC-Transponder sein. Um die Belastungen eines solchen Transponders im Fahrbetrieb in einem vertretbaren Rahmen zu halten, ist das Identifikationsmittel 44 vorzugsweise in der Seitenwand des Reifens 40 angeordnet. Sowohl der Reifendrucksensor 42 als auch das Identifikationsmittel 44 weisen einen Einrichtungsmodus auf, der z.B. durch ein externes Signal oder auf Grundlage von Messwerten aktiviert wird, im Falle des Reifendrucksensors 42 z.B. auf Basis eines gemessenen Druckes.

Fig. 5 zeigt schematisch den Aufbau einer erfindungsgemäßen elektronischen Komponente am Beispiel eines Reifendrucksensors 42. Der Reifendrucksensor 42 weist einen Drucksensor 50 für die Messung des Reifendrucks sowie einen Beschleunigungssensor 51 für das Feststellen einer Reifenbewegung auf. Die Messwerte des Beschleunigungssensors 51 werden üblicherweise genutzt, um verschiedene Betriebsmodi des Reifendrucksensors 42 zu aktivieren, z.B. einen Modus "Parken" oder einen Modus "Fahren". Ein Energiemanager 52 regelt die Energieversorgung der verschiedenen Komponenten des Reifendrucksensors 42. Firmware, Applikationen und Kalibrierungsdaten des Reifendrucksensors 42 sind in einem Speicher 53 abgelegt. Dieser kann beispielsweise einen ROM-Speicher (ROM: Read-Only Memory; Nur-Lese-Speicher) und einen Flash-Speicher umfassen. Für das Übermitteln von Daten ist ein RF-Sender 54 vorgesehen, der beispielsweise mit einer Frequenz von 315 MHz oder 434 MHz senden kann. Zum Empfangen von Daten ist ein LF-Empfänger 55 vorgesehen, der z.B. eine Frequenz von 125 kHz verwenden kann. Die Messwerte des Drucksensors 50 und des Beschleunigungssensors 51 werden von einem A/D-Wandler 56 in digitale Daten gewandelt. Die Steuerung des Reifendrucksensors 42 erfolgt durch einen Mikrocontroller 57. Der Reifendrucksensor 42 kann z.B. durch ein vom LF-Empfänger 55 empfangenes Signal oder auf Grundlage von Messwerten des Drucksensors 50 und des Beschleunigungssensors 51 in einen Einrichtungsmodus versetzt werden, der nicht einem normalen Anfahr- oder Fahrmodus entspricht. Beispielsweise kann der Einrichtungsmodus aktiviert werden, wenn vom Drucksensor 50 eine Erhöhung des Reifendrucks über einen Schwellwert gemessen und vom Beschleunigungssensor 51 zugleich eine Bewegung des Reifens über einen Mindestzeitraum festgestellt wird. Nach Aktivierung des Einrichtungsmodus sendet der RF-Sender 54 mit einem sehr geringen zeitlichen Abstand eine Vielzahl von Signalen. Diese unterstützen die Bestimmung der Position des Reifendrucksensors 42 in Bezug auf das Kraftfahrzeug, in dem der Reifendrucksensor 42 verbaut ist.

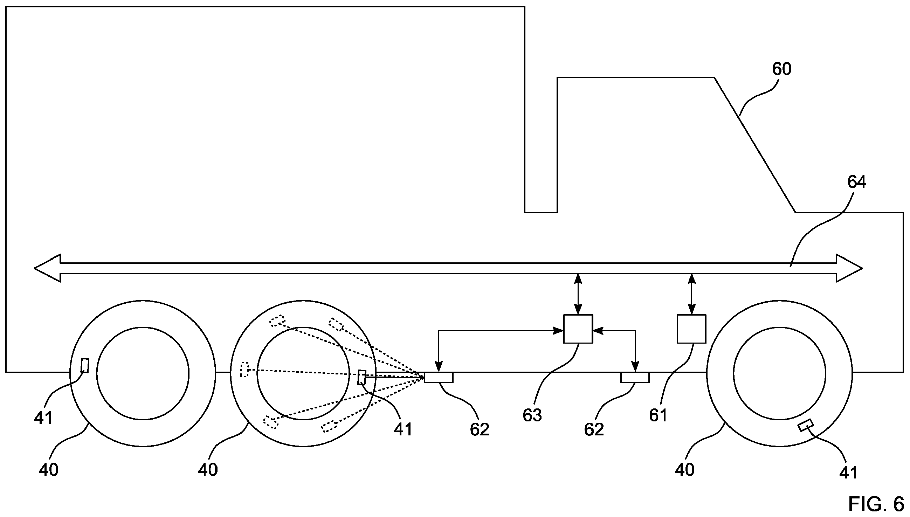

Fig. 6 zeigt schematisch ein Kraftfahrzeug 60, in dem eine erfindungsgemäße Lösung realisiert ist. Bei dem Kraftfahrzeug 60 handelt es sich in diesem Fall um einen Lastkraftwagen. Das Kraftfahrzeug 60 weist ein Kontrollsystem 61 auf, z.B. ein Reifendruckkontrollsystem. In den Reifen 40 des Kraftfahrzeugs sind elektronische Komponenten 41 angeordnet, die vom Kontrollsystem 61 genutzt werden sollen. Für die Kommunikation mit den elektronischen Komponenten 41 weist das Kraftfahrzeug 60 einen oder mehrere Empfänger 62 auf, die an eine zentrale Kontrolleinheit 63 (CCU: Central Control Unit) angebunden sind. Die Kommunikation der Komponenten im Kraftfahrzeug 60 erfolgt beispielsweise über ein Netzwerk 64.

Die jeweiligen Positionen der elektronischen Komponenten 41 sollen automatisch erkannt werden. Zu diesem Zweck soll die Funkstärke der von den elektronischen Komponenten 41 gesendeten Signale an den Empfängern 62 genutzt werden. Dazu müssen die empfangenen Signalstärkewerte für ein und dieselbe elektronische Komponente 41 relativ konstant sein und von denen der anderen im Kraftfahrzeug 60 vorhandenen elektronischen Komponenten 41 unterscheidbar sein. Die Signalstärke der Funksignale am Empfänger 62 ist abhängig von der Entfernung zwischen Sender und Empfänger 62. Bei elektronischen Komponenten 41, die in den Innerliner geklebt oder in die Seitenwand des Reifens 40 eingelassen sind, ändert sich der Abstand allerdings permanent, sobald sich das Rad dreht. Dies hat zur Folge, dass sich die RSSI-Werte (RSSI: Received Signal Strength Indication; Indikator für die Empfangsfeldstärke) für die empfangenen Signale von ein und demselben Reifen 40 fortlaufend ändern. Dieser Effekt ist bei Lastkraftwagen aufgrund der größeren Reifendurchmesser besonders groß. In Fig. 6 ist dieser Effekt an einem der hinteren Reifen schematisch dargestellt. Bei der erfindungsgemäßen Lösung wird das Problem der schwankenden Signalstärke dadurch gelöst, dass die elektronischen Komponenten 41 in einen Einrichtungsmodus wechseln, in dem sie mit einem sehr geringen zeitlichen Abstand eine Vielzahl von Signalen senden. Von den Signalstärken, die während des Zeitraums des Einrichtungsmodus erfasst werden, können beispielsweise die maximalen Werte ermittelt und zur Realisierung der Positionsbestimmung verwendet werden. Ist der Zeitraum des Einrichtungsmodus lang genug und die Senderfrequenz hoch genug, werden ausreichend viele Situationen auftreten, in denen der Abstand zwischen der elektronischen Komponente 41 und dem jeweiligen Empfänger 62 am kürzesten ist.

### Bezugszeichenliste

- 10: Aktivieren eines Einrichtungsmodus
- 11: Senden einer Vielzahl von Signalen
- 12: Empfangen der gesendeten Signale
- 13: Bestimmen einer Signalstärke der empfangenen Signale
- 14: Bestimmen einer Position der elektronischen Komponente in Bezug auf das Kraftfahrzeug
- 15: Deaktivieren des Einrichtungsmodus
- 20: Vorrichtung
- 21: Eingang
- 22: Empfangseinheit
- 23: Auswerteeinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- 40: Reifen
- 41: Elektronische Komponente
- 42: Reifendrucksensor
- 43: Ventil
- 44: Identifikationsmittel
- 45: Innerliner
- 50: Drucksensor
- 51: Beschleunigungssensor
- 52: Energiemanagement
- 53: Speicher
- 54: RF-Sender
- 55: LF-Empfänger
- 56: A/D-Wandler
- 57: Mikrocontroller
- 60: Kraftfahrzeug
- 61: Kontrollsystem
- 62: Empfänger
- 63: Zentrale Kontrolleinheit
- 64: Netzwerk

## Patentansprüche

1. Verfahren zum automatischen Einrichten eines Kontrollsystems (61) für eine in einem Reifen (40) eines Kraftfahrzeugs (60) angeordnete elektronische Komponente (41), wobei die elektronische Komponente ein Reifendrucksensor ist, mit den Schritten:
- Aktivieren (10) eines Einrichtungsmodus der elektronischen Komponente (41);
- Senden (11) einer Vielzahl von Signalen durch die elektronische Komponente (41) mit einem zeitlichen Signalabstand, der kürzer ist als ein zeitlicher Signalabstand in anderen Betriebsmodi der elektronischen Komponente; und
- Deaktivieren (15) des Einrichtungsmodus der elektronischen Komponente (41); **dadurch gekennzeichnet, dass** der Einrichtungsmodus der elektronischen Komponente (41) im Ansprechen auf ein von der elektronischen Komponente (41) empfangenes externes Signal oder eine von der elektronischen Komponente (41) gemessene Erhöhung eines Reifendrucks über einen Schwellwert aktiviert wird (10).

2. Verfahren gemäß Anspruch 1, wobei der Einrichtungsmodus der elektronischen Komponente (41) nur aktiviert wird (10), wenn eine Bewegung des Reifens (40) über einen Mindestzeitraum festgestellt wird.

3. Verfahren nach Anspruch 1 oder Anspruch 2 , mit den Schritten:
- Empfangen (12) einer Vielzahl von Signalen durch eine Empfangseinheit (22) im Kraftfahrzeug (60), die von zumindest einer in einem Einrichtungsmodus befindlichen elektronischen Komponente (41) mit einem zeitlichen Signalabstand gesendet werden (11), der kürzer ist als ein zeitlicher Signalabstand in anderen Betriebsmodi der elektronischen Komponente;
- Bestimmen (13) einer Signalstärke der empfangenen Signale; und
- Bestimmen (14) einer Position der elektronischen Komponente (41) in Bezug auf das Kraftfahrzeug (60) auf Basis der Signalstärke;
**dadurch gekennzeichnet, dass** beim Bestimmen (13) der Signalstärke für die zumindest eine in einem Einrichtungsmodus befindliche elektronische Komponente (41) ein Maximalwert der Signalstärke der empfangenen Signale bestimmt wird.

4. Verfahren gemäß einem der vorherigen Ansprüche, wobei der Einrichtungsmodus der elektronischen Komponente (41) nach einem vorgegebenen Zeitraum deaktiviert wird (15).

5. Verfahren gemäß einem der vorherigen Ansprüche, wobei das Kontrollsystem (61) ein Reifendruckkontrollsystem ist.

6. Verfahren gemäß einem der vorherigen Ansprüche, wobei das Kraftfahrzeug (60) ein Lastkraftwagen, ein Bus oder eine Baumaschine ist.

7. Computerprogramm mit Instruktionen, die bei Ausführung durch einen Computer den Computer zur Ausführung der Schritte eines Verfahrens gemäß einem der Ansprüche 1 bis 6 zum automatischen Einrichten eines Kontrollsystems (61) für eine in einem Reifen (40) eines Kraftfahrzeugs (60) angeordnete elektronische Komponente (41) veranlassen.

8. Elektronische Komponente (41) zur Verwendung mit einem Verfahren gemäß einem der Ansprüche 1 bis 6, wobei die elektronische Komponente (41) ein Reifendrucksensor ist und einen aktivierbaren Einrichtungsmodus aufweist, und wobei die elektronische Komponente (41) eingerichtet ist, im Einrichtungsmodus eine Vielzahl von Signalen mit einem zeitlichen Signalabstand zu senden, der kürzer ist als ein zeitlicher Signalabstand in anderen Betriebsmodi der elektronischen Komponente, dass die elektronische Komponente (41) eingerichtet ist, den Einrichtungsmodus im Ansprechen auf ein von der elektronischen Komponente (41) empfangenes externes Signal oder eine von der elektronischen Komponente (41) gemessene Erhöhung eines Reifendrucks über einen Schwellwert zu aktivieren.

9. Elektronische Komponente (41) gemäß Anspruch 8, wobei die elektronische Komponente (41) eingerichtet ist, den Einrichtungsmodus nur dann zu aktivieren (10), wenn eine Bewegung des Reifens (40) über einen Mindestzeitraum festgestellt wird.

10. Vorrichtung (20) zum automatischen Einrichten eines Kontrollsystems (61) für eine in einem Reifen (40) eines Kraftfahrzeugs (60) angeordnete elektronische Komponente (41), mit
- einer Empfangseinheit (22) zum Empfangen (12) einer Vielzahl von Signalen, die von zumindest einer in einem Einrichtungsmodus befindlichen elektronischen Komponente (41) mit einem zeitlichen Signalabstand gesendet werden (11), der kürzer ist als ein zeitlicher Signalabstand in anderen Betriebsmodi der elektronischen Komponente; und
- einer Auswerteeinheit (23) zum Bestimmen (13) einer Signalstärke der empfangenen Signale und zum Bestimmen (14) einer Position der elektronischen Komponente (41) in Bezug auf das Kraftfahrzeug (60) auf Basis der Signalstärke;
**dadurch gekennzeichnet, dass** die Auswerteeinheit (23) eingerichtet ist, beim Bestimmen (13) der Signalstärke für die zumindest eine in einem Einrichtungsmodus befindliche elektronische Komponente (41) einen Maximalwert der Signalstärke der empfangenen Signale zu bestimmen,
aufweisend eine Elektronische Komponente (41) gemäß Anspruch 8 oder Anspruch 9.

## Claims

1. Method for automatically setting up a monitoring system (61) for an electronic component (41) arranged in a tyre (40) of a motor vehicle (60), wherein the electronic component is a tyre pressure sensor, having the steps of:
- activating (10) a setup mode of the electronic component (41);
- sending (11) a multiplicity of signals by way of the electronic component (41) with a temporal signal spacing shorter than a temporal signal spacing in other operating modes of the electronic component; and
- deactivating (15) the setup mode of the electronic component (41);
**characterized in that** the setup mode of the electronic component (41) is activated (10) in response to an external signal received from the electronic component (41) or an increase in a tyre pressure above a threshold value, as measured by the electronic component (41).

2. Method according to Claim 1, wherein the setup mode of the electronic component (41) is activated (10) only when a movement of the tyre (40) over a minimum period of time is detected.

3. Method according to Claim 1 or Claim 2, having the steps of:
- receiving (12) a multiplicity of signals by way of a receiving unit (22) in the motor vehicle (60), which signals are sent (11) by at least one electronic component (41) in a setup mode with a temporal signal spacing shorter than a temporal signal spacing in other operating modes of the electronic component;
- determining (13) a signal strength of the received signals; and
- determining (14) a position of the electronic component (41) in relation to the motor vehicle (60) on the basis of the signal strength;
**characterized in that**, when determining (13) the signal strength for the at least one electronic component (41) in a setup mode, a maximum value of the signal strength of the received signals is determined.

4. Method according to one of the preceding claims, wherein the setup mode of the electronic component (41) is deactivated (15) after a predefined period of time.

5. Method according to one of the preceding claims, wherein the monitoring system (61) is a tyre pressure monitoring system.

6. Method according to one of the preceding claims, wherein the motor vehicle (60) is a lorry, a bus or a construction machine.

7. Computer program containing instructions which, when executed by a computer, cause the computer to execute the steps of a method according to one of Claims 1 to 6 for automatically setting up a monitoring system (61) for an electronic component (41) arranged in a tyre (40) of a motor vehicle (60).

8. Electronic component (41) for use with a method according to one of Claims 1 to 6, wherein the electronic component (41) is a tyre pressure sensor and has an activatable setup mode, and wherein the electronic component (41) is set up in the setup mode to send a multiplicity of signals with a temporal signal spacing shorter than a temporal signal spacing in other operating modes of the electronic component, and the electronic component (41) is set up to activate the setup mode in response to an external signal received from the electronic component (41) or an increase in a tyre pressure above a threshold value, as measured by the electronic component (41).

9. Electronic component (41) according to Claim 8, wherein the electronic component (41) is set up to activate (10) the setup mode only when a movement of the tyre (40) over a minimum period of time is detected.

10. Device (20) for automatically setting up a monitoring system (61) for an electronic component (41) arranged in a tyre (40) of a motor vehicle (60), having
- a receiving unit (22) for receiving (12) a multiplicity of signals which are sent (11) by at least one electronic component (41) in a setup mode with a temporal signal spacing shorter than a temporal signal spacing in other operating modes of the electronic component; and
- an evaluation unit (23) for determining (13) a signal strength of the received signals and for determining (14) a position of the electronic component (41) with respect to the motor vehicle (60) on the basis of the signal strength;
**characterized in that** the evaluation unit (23) is set up, when determining (13) the signal strength for the at least one electronic component (41) in a setup mode, to determine a maximum value of the signal strength of the received signals, comprising an electronic component (41) according to Claim 8 or Claim 9.

## Revendications

1. Procédé de configuration automatique d'un système de contrôle (61) destiné à un composant électronique (41) agencé dans un pneu (40) d'un véhicule automobile (60), le composant électronique étant un capteur de pression de pneu, comprenant les étapes suivantes :
- l'activation (10) d'un mode de configuration du composant électronique (41) ;
- l'envoi (11) d'une pluralité de signaux par le composant électronique (41) avec un espacement temporel de signal qui est plus court qu'un espacement temporel de signal dans d'autres modes de fonctionnement du composant électronique ; et
- la désactivation (15) du mode de configuration du composant électronique (41) ;
**caractérisé en ce que** le mode de configuration du composant électronique (41) est activé (10) en réponse à un signal externe reçu par le composant électronique (41) ou à une augmentation d'une pression de pneu, mesurée par le composant électronique (41), au-dessus d'une valeur de seuil.

2. Procédé selon la revendication 1, dans lequel le mode de configuration du composant électronique (41) n'est activé (10) que lorsqu'un mouvement du pneu (40) est détecté au cours d'un laps de temps minimal.

3. Procédé selon la revendication 1 ou la revendication 2, comprenant les étapes suivantes :
- la réception (12), par une unité de réception (22) dans le véhicule automobile (60), d'une pluralité de signaux qui sont envoyés (11) par au moins un composant électronique (41) se trouvant dans un mode de configuration avec un espacement temporel de signal qui est plus court qu'un espacement temporel de signal dans d'autres modes de fonctionnement du composant électronique ;
- la détermination (13) d'une intensité de signal des signaux reçus ; et
- la détermination (14) d'une position du composant électronique (41) par rapport au véhicule automobile (60) sur la base de l'intensité de signal ;
**caractérisé en ce que**, lors de la détermination (13) de l'intensité de signal pour ledit au moins un composant électronique (41) se trouvant dans un mode de configuration, une valeur maximale de l'intensité de signal des signaux reçus est déterminée.

4. Procédé selon l'une des revendications précédentes, dans lequel le mode de configuration du composant électronique (41) est désactivé (15) après un laps de temps prédéfini.

5. Procédé selon l'une des revendications précédentes, dans lequel le système de contrôle (61) est un système de contrôle de pression de pneu.

6. Procédé selon l'une des revendications précédentes, dans lequel le véhicule automobile (60) est un camion, un bus ou une machine de construction.

7. Programme informatique comportant des instructions qui, lorsqu'elles sont exécutées par un ordinateur, amènent l'ordinateur à exécuter les étapes d'un procédé selon l'une des revendications 1 à 6 pour configurer automatiquement un système de contrôle (61) destiné à un composant électronique (41) agencé dans un pneu (40) d'un véhicule automobile (60).

8. Composant électronique (41) destiné à être utilisé avec un procédé selon l'une des revendications 1 à 6, le composant électronique (41) étant un capteur de pression de pneu et comportant un mode de configuration activable, et le composant électronique (41) étant conçu pour envoyer, dans le mode de configuration, une pluralité de signaux avec un espacement temporel de signal qui est plus court qu'un espacement temporel de signal dans d'autres modes de fonctionnement du composant électronique, le composant électronique (41) étant conçu pour activer le mode de configuration en réponse à un signal externe reçu par le composant électronique (41) ou à une augmentation d'une pression de pneu, mesurée par le composant électronique (41), au-dessus d'une valeur de seuil.

9. Composant électronique (41) selon la revendication 8, dans lequel le composant électronique (41) est conçu pour n'activer le mode de configuration (10) que lorsqu'un mouvement du pneu (40) est détecté au cours d'un laps de temps minimal.

10. Dispositif (20) de configuration automatique d'un système de contrôle (61) destiné à un composant électronique (41) agencé dans un pneu (40) d'un véhicule automobile (60), comprenant
- une unité de réception (22) destinée à recevoir (12) une pluralité de signaux qui sont envoyés (11) par au moins un composant électronique (41) se trouvant dans un mode de configuration avec un espacement temporel de signal qui est plus court qu'un espacement temporel de signal dans d'autres modes de fonctionnement du composant électronique ; et
- une unité d'évaluation (23) destinée à déterminer (13) une intensité de signal des signaux reçus et à déterminer (14) une position du composant électronique (41) par rapport au véhicule automobile (60) sur la base de l'intensité de signal ;
**caractérisé en ce que** l'unité d'évaluation (23) est conçue pour déterminer, lors de la détermination (13) de l'intensité de signal destinée audit au moins un composant électronique (41) se trouvant dans un mode de configuration, une valeur maximale de l'intensité de signal des signaux reçus,
comportant un composant électronique (41) selon la revendication 8 ou la revendication 9.
